Europäisches Patentamt

European Patent Office

Office européen des brevets

(11) Veröffentlichungsnummer: **0 517 056 A1**

## (12) EUROPÄISCHE PATENTANMELDUNG

(21) Anmeldenummer: **92108746.6**

(51) Int. Cl.⁵: **F17D 3/08**

(22) Anmeldetag: **23.05.92**

(30) Priorität: **05.06.91 DE 9106866 U**

(43) Veröffentlichungstag der Anmeldung:
**09.12.92 Patentblatt 92/50**

(84) Benannte Vertragsstaaten:
**BE DE FR GB IT NL**

(71) Anmelder: **PFEIFFER CHEMIE-ARMATUREN GmbH**
**Hooghe Weg 41**

**W-4152 Kempen 1(DE)**

(72) Erfinder: **Der Erfinder hat auf seine Nennung verzichtet**

(74) Vertreter: **Sroka, Peter-Christian, Dipl.-Ing.**
**Dominikanerstrasse 37 Postfach 111038**
**W-4000 Düsseldorf 11(DE)**

(54) **Drehschieber.**

(57) Ein Drehschieber mit einem Gehäuse, daß einen Haupt-Strömungskanal und einen unter einem Winkel in diesen Haupt-Strömungskanal einmündenden Neben-Strömungskanal aufweist, und mit einem eine Durchgangsbohrung aufweisenden Abschlußteil, das drehbar und mittels zwei Dichtungen abgedichtet in den Neben-Strömungskanal eingesetzt ist, ist dadurch gekennzeichnet, daß das Abschlußteil an seinem Außenumfang mit einer Einbuchtung versehen und so in das Gehäuse eingesetzt ist, daß in der Schließstellung des Abschlußteils der Boden der Einbuchtung mit der Wand des Haupt-Strömungskanals stufen- und absatzlos fluchtet und damit der Haupt-Strömungskanal eine in sich geschlossene Wand hat.

Figur 1

Die Neuerung betrifft einen Drehschieber mit einem Gehäuse, das einen Haupt-Strömungskanal und einen unter einem Winkel in diesen Haupt-Strömungskanal einmündenden Neben-Strömungskanal aufweist, und mit einem eine Durchgangsbohrung aufweisenden Abschlußteil, das drehbar und mittels zwei Dichtungen abgedichtet in den Neben-Strömungskanal eingesetzt ist.

Zur Reinigung von Rohrleitungen oder auch zur Ver-Stopfungsortung ist es üblich, sogenannte Molche durch die Rohrleitung zu drücken. Daraus ergibt es sich, auch in solche Rohrleitungen eingesetzte Drehschieber "molchbar" zu machen. Bei einem in der EP-0 375 533-A1 beschriebenen "molchbaren" Drehschieber geschieht das in der Weise, daß das Abschlußteil derart in den Neben-Strömungskanal eingesetzt ist, daß das Abschlußteil weder im geöffneten noch im geschlossenen Zustand in den Haupt-Strömungskanal hinein ragt. Der Nachteil einer derartigen Konstruktion besteht darin, daß kein durchgehender glatter Kanalquerschnitt vorhanden ist, sondern daß insbesondere im geschlossenen Zustand des Drehschiebers seitliche Ausbuchtungen bzw. Toträume gebildet sind, die der Anlaß für unerwünschte Materialablagerungen sein können.

Der Erfindung liegt die Aufgabe zugrunde, einen Drehschieber der eingangs geschilderten Art so zu gestalten, daß der Haupt-Strömungskanal sowohl bei geöffnetem als auch bei geschlossenem Drehschieber molchbar ist, um einen Molch durch diesen Haupt-Strömungskanal hindurchschikken zu können, wobei die bei den bekannten molchbaren Drehschiebern vorhandenen Toträume vermieden werden sollen.

Zur Lösung dieser Aufgabe dient ein Drehschieber mit den Merkmalen des Anspruchs 1.

Bei Drehschiebern mit einem einen Durchgangsbohrung aufweisenden Abschlußteil, das drehbar und mittels zwei Dichtungsringen abgedichtet in die Durchgangsbohrung eines Gehäuses eingesetzt ist, besteht je nach dem Verwendungs- bzw. Einsatzzweck häufig die Notwendigkeit, zum Beispiel zur Kontaminationssicherung die Dichtigkeit der Armatur zu überwachen.

Zu diesem Zweck ist ein derartiger Drehschieber gekennzeichnet durch eine, durch die Wand des Gehäuses zwischen die Dichtungsringe geführte Lecküberwachungsbohrung, die in der Schließstellung des Abschlußteiles in eine Anschlußbohrung des Abschlußteiles mündet. Diese Anschlußbohrung mündet vorzugsweise in die Durchgangsbohrung des Abschlußteiles, so daß bei geschlossenem Drehschieber, beispielsweise Kugelhahn, mit beidseitig funktionstüchtiger Dichtung durch das Anbohren des Kugelhahninnenraumes eine zuverlässige Lecküberwachung möglich ist.

Um beim Öffnen des Drehschiebers einen Austritt des Mediums durch die Lecküberwachungsbohrung zu verhindern, ist neuerungsgemäß vorgesehen, daß diese Lecküberwachungsbohrung durch dieses Abschlußteil abgedichtet ist, und zwar während der "Offen-Stellung" und während der gesamten Schwenkbewegung des Abschlußteiles. Die durch die Gehäusewandung und durch das Abschlußteil geführten Abschnitte der Lecküberwachungsbohrung sind so angebracht, das sie lediglich bei geschlossenem Drehschieber bzw. wenige Grade vor der Stellung "geschlossen" in einer Linie liegen bzw. aneinander anschließen, so daß erst in der "Schließ-Stellung" des Drehschiebers ggf. ein Stoffaustritt aus dem Innenraum des Abschlußteiles möglich ist.

Gemäß weiterer Ausgestaltung der Neuerung ist vorgesehen, daß die Lecküberwachungsbohrung durch einen in eine Bohrung der Gehäusewand eingesetzten Dichtkörper geführt ist, der abdichtend gegen die Außenfläche des Abschlußteiles anliegt. In die Bohrung der Gehäusewand ist ein Einschraubelement eingeschraubt, zwischen dessen innere Stirnfläche und den Dichtkörper eine Feder gelegt ist, wobei dieses Einschraubelement als Teil der Lecküberwachungsbohrung mit einer zentralen Bohrung versehen ist. Die abdichtende Anlagestellung des Dichtkörpers gegen die Außenfläche des Abschlußteiles ist dadurch sichergestellt, daß der Dichtkörper mittels der vorgespannten Feder, vorzugsweise Tellerfeder, vorgespannt und permanent gegen das Abschlußteil gedrückt wird. Die seitliche Abdichtung des Dichtkörpers und gegebenenfalls des Einschraubelementes erfolgt mittels zusätzlicher Dichtungsringe.

Das Einschraubelement weist vorzugsweise an seiner äußeren Stirnseite eine Gewindebohrung zum Einschrauben einer Lecküberwachungseinrichtung oder eines Verschlußstopfens auf.

Zur Bildung eines Zudosier-Drehschiebers ist das Abschlußteil vorzugsweise in den TT-Steg eines das Gehäuse bildenden Rohrverbindungs-TT-Stückes eingesetzt. Das Abschlußteil kann zur Bildung eines Hahnkükens als Hahnkegel ausgebildet sein oder zur Bildung eines Kugelkükens eine zylindrische oder kugelige Form aufweisen.

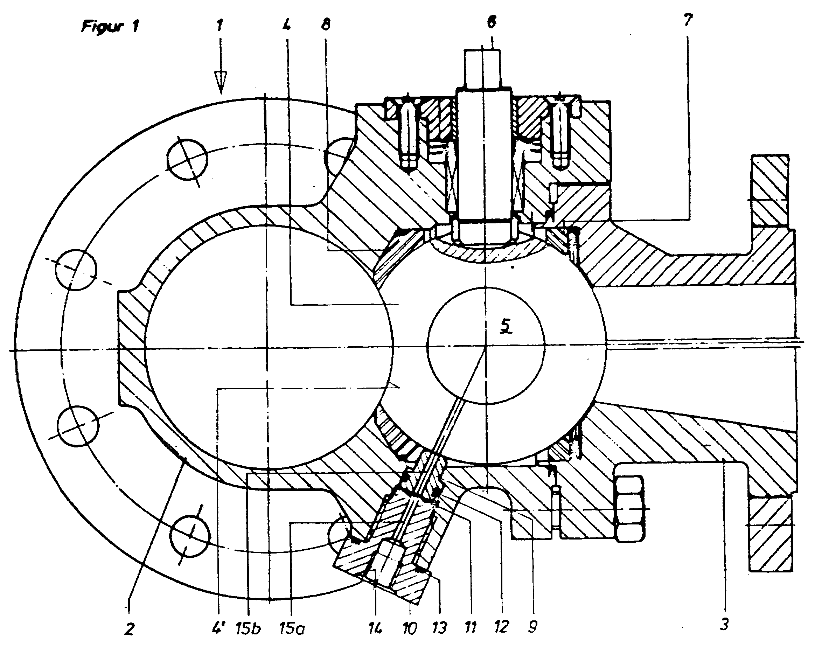

Die Neuerung wird im folgenden anhand der Zeichnung näher beschrieben. Die Figuren 1, 2 und 3 zeigen Schnittansichten verschiedener Ausführungsformen eines Drehschiebers.

Die Zeichnung zeigt in beispielhafter Weise einen zum Beispiel als Zudosier-Drehschieber 1 ausgebildeten Drehschieber mit einem gradlinig durchgehenden Rohrverbindungsstück 2 als Haupt-Strömungskanal, in den vorzugsweise rechtwinklig ein Anschluß-Rohrstück 3 als Neben-Strömungskanal einmündet, so daß insgesamt als Gehäuse des Drehschiebers ein Rohrverbindungs-TT-Stück gebildet ist. In den das Anschluß-Rohrstück 3 bildenden TT-Steg ist ein kugelförmiges Abschlußteil 4 eingesetzt, das eine Durchgangsbohrung 5 aufweist. Das Abschlußteil 4 ist mittels einer abgedichtet durch das Gehäuse geführten Stellspindel 6 zwischen der in den Figuren dargestellten Schließstellung und einer Offen-Stellung verschwenkbar, in der die Durchgangsbohrung 5 den Innenraum, d.h. den Neben-Strömungskanal des Anschlußstücks 3 mit dem Innenraum, d.h. dem Haupt-Strömungskanal des Rohrverbindungsstückes 2 verbindet. Das Abschlußteil 4 ist mittels gegen seine Außenfläche anliegenden Dichtungsringen 7 und 8 abdichtend in dem Gehäuse gelagert.

Das Abschlußteil 4 ist an seinem Außenumfang mit einer Einbuchtung 4' versehen und so in das Gehäuse bzw. den Neben-Strömungskanal eingesetzt, daß in der Schließ-Stellung des Abschlußteiles 4 der Boden der Einbuchtung 4' mit der Wand des Haupt-Strömungskanals stufen- und absatzlos fluchtet und der Haupt-Strömungskanal eine in sich geschlossene Wand hat. Für einen Haupt-Strömungskanal mit kreisrundem Querschnitt bedeutet dies, daß der Boden der Einbuchtung 4' kreisbogenförmig ist, wobei der Kreismittelpunkt des Haupt-Strömungskanals und der Krümmungsmittelpunkt der Einbuchtung 4' in der Schließ-Stellung des Abschlußteils 4 zusammenfallen.

Zur Bildung einer Kontaminationssicherung bzw. einer Lecküberwachungseinrichtung ist gemäß Figur 1 eine in der Schließstellung des Drehschiebers durch die Wand des Gehäuses zwischen den Dichtungsringen 7 und 8 in die Durchgangsbohrung 5 des Abschlußteils 4 führende Lecküberwachungsbohrung 15a, 15b und 15' vorgesehen, von der der Abschnitt 15b durch einen in eine Bohrung der Gehäusewand eingesetzten Dichtkörper 9 geführt ist, während der Abschnitt 15a durch ein in die Bohrung der Gehäusewand eingeschraubtes Einschraubelement 10 hindurchgeführt ist, und der Abschnitt 15' durch das Abschlußteil 4 bis in die Durchgangsbohrung 5 verläuft. Zwischen der inneren Stirnfläche des Einschraubelementes 10 und den Dichtkörper 9 ist eine Feder, insbesondere Tellerfeder 11, gelegt, die bei entsprechender Stellung des Einschraubelementes 10 eine permanente, vorgespannte Anlage- und Dichtstellung des Dichtkörpers 9 gegen die Außenfläche des Abschlußteils 4 gewährleistet.

Der Dichtkörper 9 und das Einschraubelement 10 sind mittels Dichtringen 12 bzw. 13 gegenüber der Gehäusebohrung abgedichtet.

Das Einschraubelement 10 weist an seiner äußeren Stirnseite eine Gewindebohrung 14 zum Einschrauben einer nicht dargestellten Lecküberwachungseinrichtung oder eines Verschlußstopfens auf.

Bei dem Abschlußteil 4 handelt es sich bei entsprechender Anpassung des Gehäuses entweder um einen Hahnenkegel oder um ein Abschlußteil mit zylindrischer oder kugeliger Form.

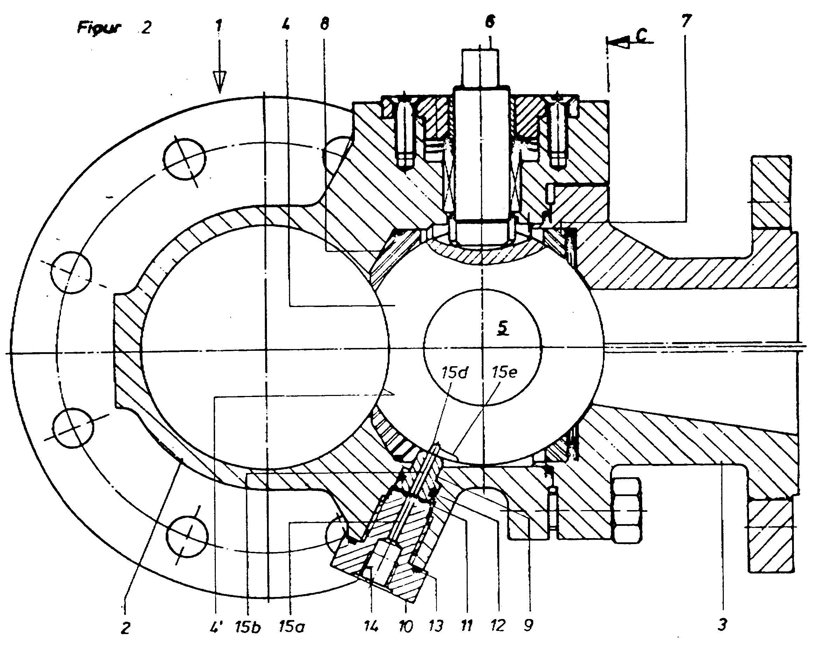

Bei der Ausführungsform gemäß Figur 2 mündet in der Schließstellung des Abschlußteils 4 die Lecküberwachungsbohrung 15a und 15b in eine als Blindbohrung ausgeführte Anschlußbohrung 15" des Abschlußteils 4. An diese als Blindbohrung ausgeführte Anschlußbohrung 15" schließt sich eine in den Außenmantel des Abschlußteils 4 eingearbeitete Nut 15e an, die in der Schließ-Stellung des Abschlußteils 4 außerhalb der Dichtfläche des Dichtkörpers 9 endet.

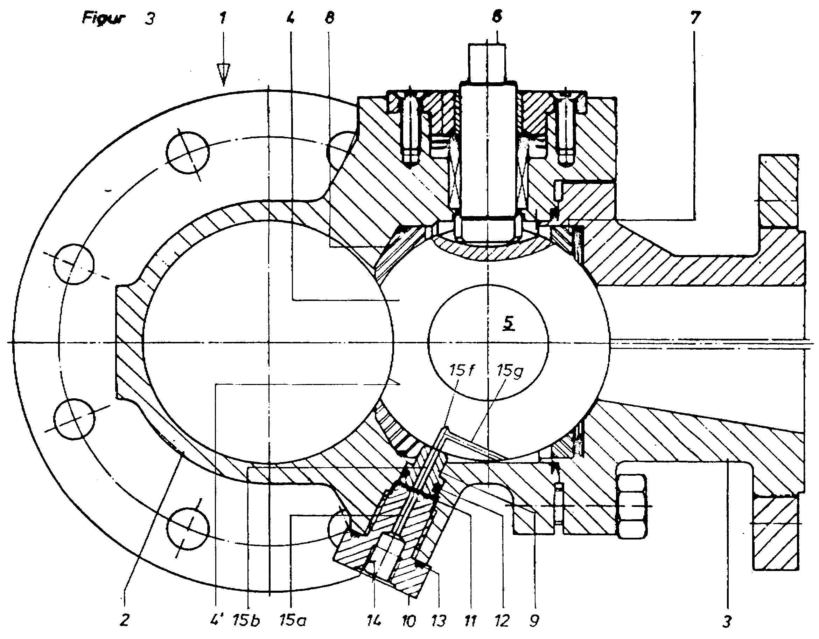

Bei der Ausführungsform gemäß Figur 3 schließt sich an die ebenfalls als Blindbohrung 15f ausgeführte Anschlußbohrung des Abschlußteils 4 eine Abzweigungsbohrung 15g an, die am Außenumfang des Abschlußteils 4 zwischen den Dichtungsringen 7 und 8 ausmündet.

## Patentansprüche

1.  Drehschieber mit einem Gehäuse, daß einen Haupt-Strömungskanal und einen unter einem Winkel in diesen Haupt-Strömungskanal einmündenden Neben-Strömungskanal aufweist, und mit einem eine Durchgangsbohrung aufweisenden Abschlußteil, das drehbar und mittels zwei Dichtungen abgedichtet in den Neben-Strömungskanal eingesetzt ist, dadurch gekennzeichnet, daß das Abschlußteil (4) an seinem Außenumfang mit einer Einbuchtung (4') versehen und so in das Gehäuse (2,3) eingesetzt ist, daß in der Schließstellung des Abschlußteils (4) der Boden der Einbuchtung (4') mit der Wand des Haupt-Strömungskanals stufen- und absatzlos fluchtet und damit der Haupt-Strömungskanal eine in sich geschlossene Wand hat.

2.  Drehschieber mit einem eine Durchgangsbohrung aufweisenden Abschlußteil, das drehbar und mittels zwei Dichtungsringen abgedichtet in die Durchgangsbohrung eines Gehäuses eingesetzt ist, gekennzeichnet durch eine durch die Wand des Gehäuses zwischen die Dichtungsringe (7, 8) geführte Lecküberwachungsbohrung (15a, 15b), die in der Schließstellung des Abschlußteils (4) in eine Anschlußbohrung (15c bzw. 15d bzw. 15f) des Abschlußteils (4) mündet.

3.  Drehschieber nach Anspruch 1, gekennzeichnet durch eine durch die Wand des Gehäuses zwischen die Dichtungsringe (7, 8) geführte Lacküberwachungsbohrung (15a, 15b), die in der Schließstellung des Abschlußteils (4) in eine Anschlußbohrung (15c bzw. 15d bzw. 15f) des Abschlußteils (4) mündet.

4. Drehschieber nach Anspruch 2 oder 3, dadurch gekennzeichnet, daß die Anschlußbohrung (15c) in die Durchgangsbohrung (5) des Abschlußteils (4) mündet.

5. Drehschieber nach Anspruch 2 oder 3, dadurch gekennzeichnet, daß die Anschlußbohrung (15d) des Abschlußteils (4) als Blindbohrung ausgeführt ist, an die sich seitlich eine am Außenmantel des Abschlußteils (4) angebrachte Nut (15e) anschließt.

6. Drehschieber nach Anspruch 2 oder 3, dadurch gekennzeichnet, daß die Anschlußbohrung (15f) als Blindbohrung ausgeführt ist, an die sich eine Abzweigungsbohrung (15g) anschließt, die am Außenumfang des Abschlußteils (4) zwischen den Dichtungen (7, 8) ausmündet.

7. Drehschieber nach einem der Ansprüche 3 bis 6, dadurch gekennzeichnet, daß der Abschnitt (15b) der Lecküberwachungsbohrung durch einen in eine Bohrung der Gehäusewand eingesetzten Dichtkörper (9) geführt ist, der abdichtend gegen die Außenfläche des Abschlußteils (4) anliegt.

8. Drehschieber nach Anspruch 7, dadurch gekennzeichnet, daß in die Bohrung der Gehäusewand ein Einschraubelement (10) eingeschraubt ist, zwischen dessen innere Stirnfläche und den Dichtkörper (9) eine Feder, insbesondere Tellerfeder (11), gelegt ist und durch das als zweiter Abschnitt (15a) der Lecküberwachungsbohrung eine zentrale Bohrung geführt ist.

9. Drehschieber nach Anspruch 8, dadurch gekennzeichnet, daß der Dichtkörper (9) und das Einschraubelement (10) mittels Dichtungsringen (12, 13) abdichtend in die Bohrung der Gehäusewand eingesetzt sind.

10. Drehschieber nach Anspruch 8, dadurch gekennzeichnet, daß das Einschraubelement (10) an seiner äußeren Stirnseite eine Gewindebohrung (14) zum Einschrauben einer Lecküberwachungseinrichtung oder eines Verschlußstopfens aufweist.

11. Drehschieber nach einem der Ansprüche 1 bis 10 in Form eines Zudosier-Drehschiebers, dadurch gekennzeichnet, daß das Abschlußteil in den T-Steg eines das Gehäuse bildenden Rohrvervindungs-T-Stückes eingesetzt ist.

12. Drehschieber nach einem der Ansprüche 1 bis 10, dadurch gekennzeichnet, daß das Abschlußteil ein Hankegel ist.

13. Drehschieber nach einem der Ansprüche 1 bis 10, dadurch gekennzeichnet, daß das Abschlußteil eine zylindrische oder kugelige Form hat.

Figur 1

Figur 2

Figur 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 244 380 (TACKE) <br> * Seite 1, Zeilen 7-22 * <br> --- | 1,2 | F 17 D 3/08 |
| A | DE-U-8 114 048 (CZEKANOWSKY) <br> * Seite 1 - Seite 2, Zeile 4 * <br> --- | 1,2 | |
| D,A | EP-A-0 375 533 (LE DEVEHAT) <br> --- | | |
| A | US-A-4 304 252 (STANTON) <br> ----- | | |

|  |
|---|
| **RECHERCHIERTE SACHGEBIETE (Int. Cl.5)** |
| F 17 D <br> F 16 K |

Der vorliegende Recherchenbericht wurde für alle Patentansprüche erstellt

| Recherchenort | Abschlußdatum der Recherche | Prüfer |
|---|---|---|
| DEN HAAG | 27-08-1992 | VERELST P.E.J. |